# EUROPEAN PATENT SPECIFICATION

(11) **EP 4 074 603 B1**
(45) Date of publication and mention of the grant of the patent: **23.07.2025**
(21) Application number: 21168678.7
(22) Date of filing: 15.04.2021
(51) Int. Cl.: B64D 15/14

(54) **DE-ICING SYSTEM, AIRFOIL AND AIRCRAFT HAVING SUCH A SYSTEM, AND DE-ICING METHOD**
ENTEISUNGSSYSTEM, TRAGFLÜGEL UND FLUGZEUG MIT EINEM SOLCHEN SYSTEM SOWIE ENTEISUNGSVERFAHREN
SYSTÈME DE DÉGIVRAGE, PROFIL AÉRODYNAMIQUE ET AÉRONEF COMPORTANT UN TEL SYSTÈME ET PROCÉDÉ DE DÉGIVRAGE

(43) Date of publication of application: 19.10.2022
(73) Proprietor: Airbus Defence and Space GmbH, 82024 Taufkirchen (DE); Airbus Operations GmbH, 21129 Hamburg (DE); University of Zürich, 8006 Zurich (CH)
(72) Inventor: Herrles, Christian, 82024 Taufkirchen (DE); Bürger, Thomas, 82024 Taufkirchen (DE); Schelle, Simon, 82024 Taufkirchen (DE); Bonaccurso, Elmar, 82024 Taufkirchen (DE); Laroche, Alexandre, 82024 Taufkirchen (DE); Bartels, Christian, 21129 Hamburg (DE); Seeger, Stefan, 8006 Zürich (CH); Bottone, Davide, 8006 Zürich (CH)
(74) Representative: KASTEL Patentanwälte PartG mbB

(56) References cited:
- EP-A1- 3 012 187
- EP-A1- 3 450 320
- EP-A1- 3 473 595
- EP-B1- 1 644 450
- EP-B1- 1 873 060
- WO-A1-2011/087412
- WO-A2-2004/113456
- WO-A2-2013/091601
- CN-A- 108 327 913
- US-A1- 2009 195 107
- US-A1- 2018 215 476
- US-A1- 2019 248 501
- US-B2- 8 864 082
- US-B2- 9 193 443

## Description

The invention relates to a de-icing system and a de-icing method. The invention further relates to an airfoil and an aircraft having the de-icing system.

During flight ice may accumulate on exposed portions of aircraft, such as leading edges of wings, horizontal and vertical tail planes, and high-lift devices, in particular if the aircraft, such as an airplane, flies through a cloud containing supercooled water droplets or if droplets impact on a supercooled airframe structure.

Different systems for preventing ice formation (anti-icing) and removing ice that has formed (de-icing) are generally known. Usually the ice protection system on commercial airliners mainly includes pneumatically operated systems employing bleed air heating or expanding inflatable rubber boots.

The known systems are usually rather energy inefficient or are not suitable for new aircraft types that are envisioned as a more electrified aircraft system architecture. A commercial transport aircraft with a more electric system aircraft architecture was recently introduced to the market using an electro-thermal ice protection system. This system still uses continuous operation (so-called anti-icing mode) and rather heavy metallic heaters.

A further issue for which de-icing is relevant is possible contamination of microperforated leading edges, such as a vertical tail plane leading edge. The microperforations improve laminarity of the aerodynamic boundary layer. The boundary layer of air can be sucked in through the microperforations. A negative pressure on the in-facing side of the leading edge allows the aerodynamic boundary layer from the out-facing surface to be controlled such that the result is an increase of laminar boundary length around the tail plane, reduction of drag, and improvement of fuel-efficiency. For further illustration reference is made to US 8 864 082 B2 and US 9,193,443 B2.

In addition to heating based systems, WO 2013 / 091 601 A2 and EP 1 644 450 B1 disclose superhydrophobic coatings to further reduce the adhesiveness of ice and simplify its removal.

EP 3 450 320 A1 discloses an ice-protection system for a rotorblade of a tiltrotor aircraft. The ice-protection system has heating elements that are resistance-tailored to the application.

US 2019 / 0 248 501 A1 discloses an ice removal system, where heaters can be individually powered depending on where ice is detected.

WO 2011 / 087 412 A1 discloses a de-icing/anti-icing system having heating elements made of carbon nanotubes.

EP 3 473 595 A1 discloses an ice protection heater element having a carbon-allotrope heater with micro perforations.

EP 3 012 187 A1 discloses an active superhydrophobic surface structure that can be switched between a superhydrophobic and ordinary state.

US 2018 0 215 476 A1 discloses a system for anti-icing with a control unit that is connected to multiple electrical leads, temperature sensors and ice detectors.

CN 108 327 913 A discloses a kind of anti-icing method based on a superhydrophobic electric heating cover.

EP 1 873 060 B1 discloses a hybrid electrical ice protection system including a first set of heaters and a second set of heaters to implement three ice protection methods in various combinations. The ice protection methods include the fully-evaporative anti-ice protection method, the wet running anti-ice protection method, and the de-ice method.

It is the object of the invention to improve de-icing systems for aircraft.

The object is achieved by the subject-matter of the independent claims. Preferred embodiments are subject-matter of the dependent claims.

The invention provides a de-icing system configured for preventing the formation of and/or removing ice on a leading edge portion of an airfoil of an aircraft, the de-icing system comprising a heating foil that is adhesively bondable to the leading edge portion and that has a plurality of heating elements that are configured to be selectively energized for heating, an ice detecting device configured for detecting the presence of ice on the leading edge portion, and a control device configured for periodically and selectively energizing the heating elements based on the ice presence measured by the ice detecting device. The control device is further configured to energize a first group of the heating elements such that a first linear heating pattern parallel to the leading edge portion is formed, in order to create a predetermined breaking line. The control device is further configured to energize a third group of the heating elements such that a plurality of second linear heating patterns that are parallel to each other and orthogonal to the first heating line are formed. The control device is configured to progressively energize and de-energize the heating elements so as to transition between different heating patterns in such a manner that the heating elements are energized progressively further away from the predetermined breaking line.

Preferably, the ice detecting device is integrated within the heating foil. Preferably, the ice detecting device includes a temperature sensor, preferably a thermocouple.

Preferably, the heating elements include carbon based material or a carbon based thin film configured to produce heat when energized. Preferably, the carbon based material or the carbon based thin film include any one of graphite, graphene and graphene related materials (GRM), or carbon nano tubes (CNT).

Preferably, the control device is further configured to cyclically energize and de-energize the first group.

Preferably, the control device is further configured to cyclically energize and de-energize the third group.

Preferably, the control device is further configured to energize a second group of the heating elements such that a square heating pattern arranged adjacent to a predetermined breaking line of the leading edge portion is formed.

Preferably, the control device is further configured to energize a second group of the heating elements such that a U shaped heating pattern that has its opening facing towards a predetermined breaking line of the leading edge portion is formed.

Preferably, the control device is further configured to energize a second group of the heating elements such that a T shaped heating pattern that has its stem adjacent to a predetermined breaking line of the leading edge portion is formed.

Preferably, the control device is further configured to energize a second group of the heating elements such that a triangular heating pattern that has its base adjacent to a predetermined breaking line of the leading edge portion is formed.

Preferably the heating triangle pattern is interposed between two consecutive third groups of heating elements.

Preferably, the control device is further configured to energize a second group of the heating elements such that a V shaped heating pattern that has its tip facing away from the predetermined breaking line of the leading edge portion is formed.

Preferably the heating V shaped pattern is interposed between two consecutive third groups of heating elements.

Preferably, the control device is further configured to energize a second group of the heating elements such that a triangular heating pattern that has a tip arranged with a distance from and facing a predetermined breaking line of the leading edge portion is formed.

Preferably, the control device is further configured to energize a second group of the heating elements such that a heating pattern having a pair of heating columns that extend orthogonal to a predetermined breaking line of the leading edge portion is formed, wherein in one of the columns extends further than the other column.

Preferably, the control device is further configured to energize a second group of the heating elements such that a row heating pattern that extends parallel to a pre-determined breaking line of the leading edge portion is formed.

Preferably, the control device is further configured to energize a second group of the heating elements such that a heating pattern of a plurality of heating rows that extend parallel to a predetermined breaking line of the leading edge portion, wherein the heating rows extend between the third group of heating elements.

Preferably, the control device is further configured to cyclically energize and de-energize the second group.

Preferably, the control device is configured to cyclically energize and de-energize the heating elements.

Preferably, the control device is configured to progressively energize and de-energize the heating elements, preferably the second group, so as to transition between different heating patterns in such a manner that the heating elements are energized progressively further along the predetermined breaking line.

Preferably, one or more heating patterns, a specific heating pattern or all heating patterns are repeated along the predetermined breaking line. Preferably, the heating patterns on one side of the predetermined breaking line are offset along the predetermined breaking line relative to the heating patterns on the other side of the predetermined breaking line.

Preferably, the de-icing system further comprises a superhydrophobic coating that is applicable to the leading edge portion, wherein the superhydrophobic coating comprises a silicone nanofilament network.

The invention provides an airfoil for an aircraft comprising a leading edge portion and a preferred de-icing system, wherein the heating foil is arranged at, preferably adhesively bonded to, an inner side of the leading edge portion, wherein the ice detecting device is arranged so as to allow for detection of ice on an outer side of the leading edge portion.

Preferably, the leading edge portion includes a plurality of microperforations configured for preserving laminarity of an aerodynamic boundary layer adjacent to the airfoil, wherein a superhydrophobic coating that has a silicone nanofilament network is arranged on an outer surface of the leading edge portion and/or a side wall portion of the microperforations.

Preferably, the airfoil is configured as a horizontal tail plane, a vertical tail plane, a high-lift device or a rotor blade.

The invention provides an airfoil for an aircraft comprising a leading edge portion that includes a plurality of microperforations configured for preserving laminarity of an aerodynamic boundary layer adjacent to the airfoil, wherein a superhydrophobic coating that has a silicone nanofilament network is arranged on an outer surface of the leading edge portion and/or a side wall portion of the microperforations.

Preferably, the airfoil includes a preferred de-icing system, wherein the heating foil is arranged at, preferably adhesively bonded to, an inner side of the leading edge portion, wherein the ice detecting device is arranged so as to allow for detection of ice on an outer side of the leading edge portion.

Preferably, the airfoil is configured as a horizontal tail plane, a vertical tail plane, a wing or a high-lift device.

The invention provides an aircraft comprising a preferred de-icing system and/or a preferred airfoil.

The invention provides a de-icing method for de-icing a leading edge portion of an airfoil of an aircraft using a heating foil attached to the leading edge portion, the heat foil having a plurality of heating elements, the method comprising the steps of:
a) energizing a first group of heating elements such that a first heating line parallel to the leading edge portion is formed, in order to create a predetermined breaking line;
b) energizing a second group of heating elements such that a progression of heating patterns is generated that progress further away from the predetermined breaking line; and
c) energizing a third group of heating elements such that a plurality of second heating lines that are parallel to each other and orthogonal to the first heating line are formed, wherein the heating elements are progressively energized and de-energized as defined in claim 13.

Subsequently advantageous effects of the invention are described in more detail. It should be noted that not all advantages need to be present at the same time or the same intensity.

Standard heating systems (e.g. bleed air or metallic heating wires) enable anti-icing operations on e.g. the wing. Hereby, the surface (e.g. wing) is continually heated. On the other hand, heating foils can exhibit a higher power density and a quicker response which enables operation in de-icing mode. In de-icing mode, ice may grow until a critical thickness is reached. Then, the heating foils are turned on and due to thermal shock, cracks are generated in the ice layer and the ice is shed off. Turning the heating foil on and off can be done automatically by using ice detection sensors and thermocouples preferably implemented into the heating foil.

Since the heating foils are not continually turned on, energy is saved with this operation method. De-icing mode also prevents run back ice contrary to the anti-icing mode. In anti-icing, the constant heating forms liquid water which may freeze again behind the heated surface. The use of a commercially available (printed) heating foil (foil + heatable ink + foil) with a high power density (e.g. > 5 W/cm²) allows for deicing.

Another idea is that the thin film heaters are based on graphite, carbon nanotubes (CNT) or graphene and related materials (GRM), which can be much lighter and more energy efficient than conventional metallic heaters. Preferably, the heaters are cyclically heated.

This technology can also be used for microperforated surfaces used for hybrid laminar flow control (HLFC) systems. The heating foil is preferably attached to the backside of the micro-perforated skin (pore diameter of approx. 50 µm) with a corresponding perforation. Another preferred use case is the implementation of a heating system on top of drones' rotor blades e.g. with a battery as a power supply attached to the middle section of the rotor blade holder.

Furthermore, if contaminants resulting from the impact of insects, engine exhaust aerosols, and ice blocked the microperforated holes, the functionality of the HLFC system could be impaired. The ideas described herein also prevent at least the icing over of the pores thereby maintaining the functionality.

Another improvement over manual de-contamination on-ground is surface functionalization, which prevents contaminants from sticking to the surface, thereby allowing aerodynamic forces to remove contaminants during flight. Usually some type of fluorination would sufficiently reduce the strength of adhesion that contaminants have to a surface.

However, for high impact velocities of contaminants during flight there is further improvement in preventing contaminants from entering and clogging the microperforations. A superhydrophobic coating, which is preferably arranged not only on the outer surface but also within the microperforations, allows both for air to pass through the microperforations and from contaminants, in particular ice, from getting stuck over and inside of the microperforations.

Embodiments of the invention are described in more detail with reference to the accompanying drawings. Therein:
- Fig. 1: an embodiment of an aircraft;
- Fig. 2: a schematic view of an embodiment of a de-icing system;
- Fig. 3: an embodiment of a heating foil;
- Fig. 4: another embodiment of a heating foil;
- Fig. 5: an embodiment of a de-icing cycle;
- Fig. 6: another embodiment of a de-icing cycle;
- Fig. 7: another embodiment of a de-icing cycle;
- Fig. 8: another embodiment of a de-icing cycle;
- Fig. 9: another embodiment of a de-icing cycle;
- Fig. 10: another embodiment of a de-icing cycle;
- Fig. 11: a schematic view of an embodiment of a leading edge portion with superhydrophobic coating;
- Fig. 12: a schematic view of another embodiment of a leading edge portion with superhydrophobic coating;
- Fig. 13: a schematic view of another embodiment of a leading edge portion with superhydrophobic coating;
- Fig. 14: a microscopic image of the leading edge portion of Figs. 12 and 13;
- Fig. 15: a diagram depicting experimental results of the superhydrophobic coating; and
- Fig. 16: an embodiment of a de-icing method.

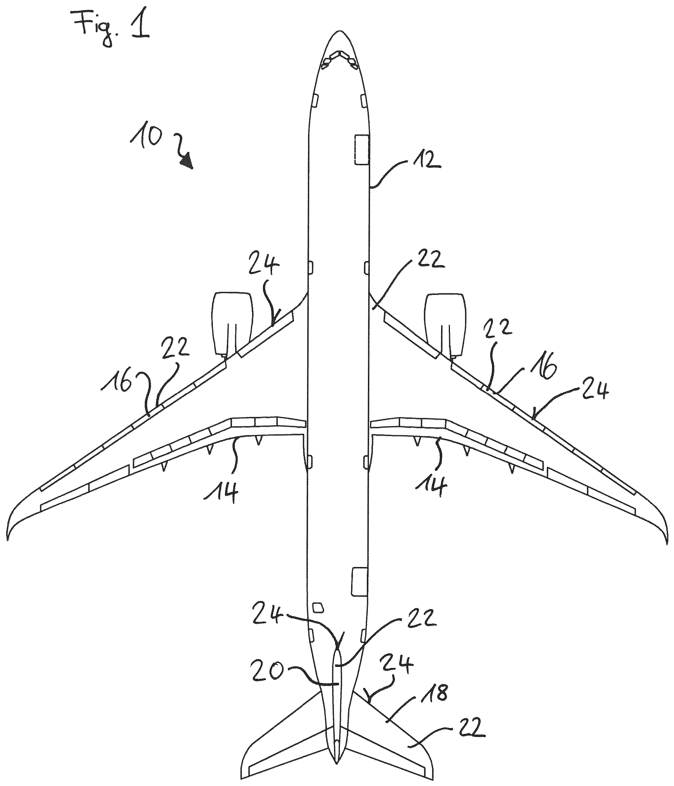

Referring to Fig. 1, an embodiment of an aircraft 10 is depicted. The aircraft 10 includes a fuselage 12. A pair of wings 14 are attached to the fuselage 12, in a manner known per se. The wing 14 may include one or more high-lift devices 16.

The aircraft 10 further comprises a horizontal tail plane 18 and a vertical tail plane 20.

The wing 14, the high-lift devices 16, and the horizontal and vertical tail plane 18, 20 are examples of an airfoil 22.

The airfoil 22 may comprise a separate leading edge member or an integrated leading edge member, collectively described herein as a leading edge portion 24.

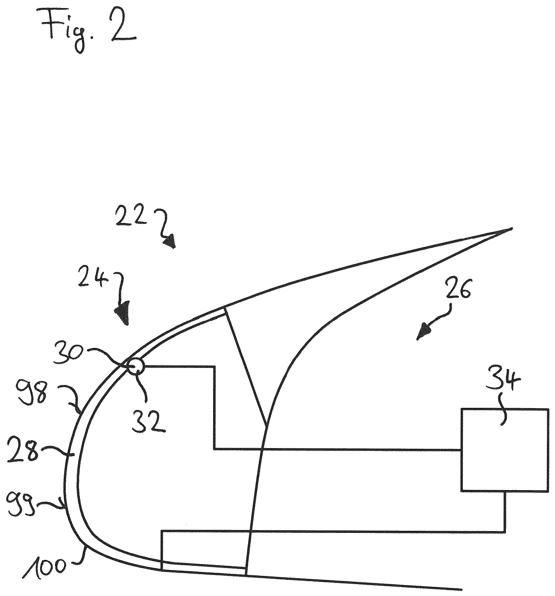

Referring to Fig. 1 and Fig. 2, the aircraft 10 includes a de-icing system 26. The de-icing system 26 comprises a heating foil 28. The heating foil 28 is arranged on an inward facing side of the leading edge portion 24.

The de-icing system 26 further comprises an ice detecting device 30 that is preferably integrated into the heating foil 28. The ice detecting device 30 includes a thermocouple 32 that is arranged on the inward facing side of the leading edge portion 24. The ice detecting device 30 may alternatively or additionally include an optical sensor with or without optical fibers, an acoustic sensor for detecting surface acoustic waves, and/or a pressure sensor.

The de-icing system 26 further comprises a control device 34. The control device 34 is connected to the heating foil 28 and the ice detecting device 30 in order to control a de-icing process.

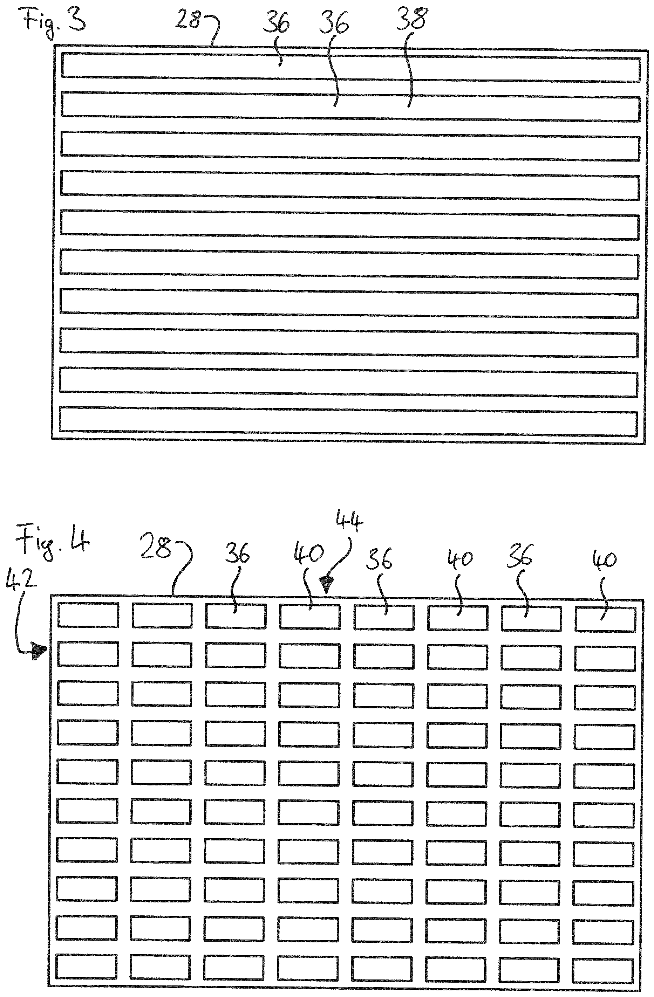

Referring to Fig. 3 and Fig. 4, the heating foil 28 includes a plurality of heating elements 36. The heating elements 36 are preferably of a carbon-based material, such as graphite, graphene and related materials (GRM) or carbon nanotubes (CNT). The heating elements 36 are configured as a thin film and preferably sandwiched in between electrically isolating thin foils. The heating foil 28 is configured such that individual heating elements 36 may be energized by the control device 34 depending on the detection of ice by the ice detecting device 30.

As depicted in Fig. 3, the heating elements 36 may be configured as heating stripes 38 that are arranged substantially in parallel to the leading edge portion 24.

As depicted in Fig. 4, in another embodiment, the heating elements 36 may be configured as heating rectangles 40. The heating elements 36 are arranged in a plurality of heating rows 42 and heating columns 44.

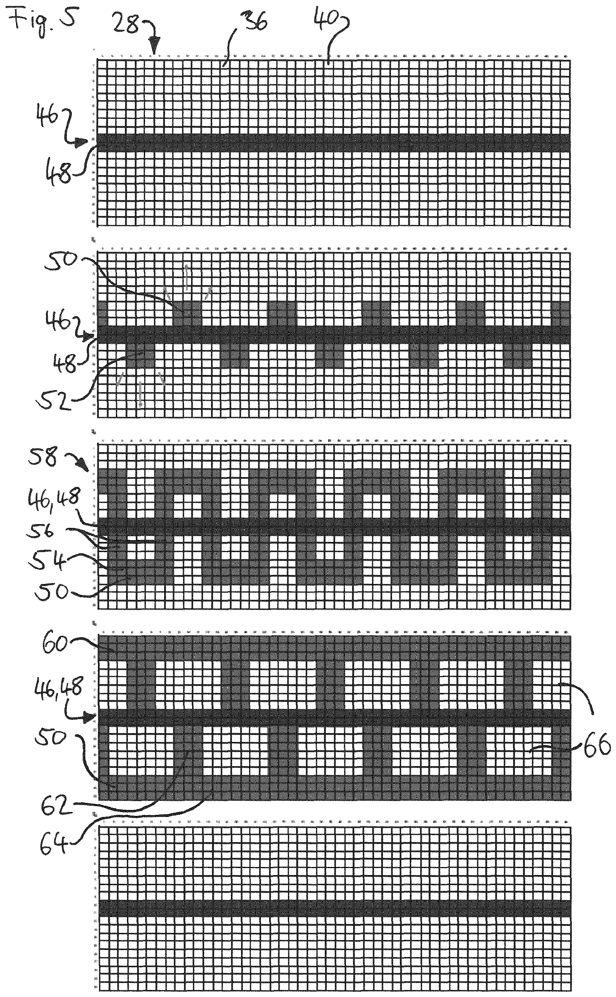

Referring now to Figs. 5 to 10, embodiments of a de-icing cycle are described in more detail.

As depicted in Fig. 5, initially a first group 46 of the heating elements 36 is energized. The first group 46 forms a first linear heating pattern 48. The first linear heating pattern 48 is parallel to the leading edge portion 24. The first linear heating pattern 48 generates a pre-determined breaking line for ice that has accumulated on the airfoil 22.

Subsequently, the control device 34 energizes a second group 50 of the heating elements 36. The second group 50 is configured as a square heating pattern 52. The square heating pattern 52 is arranged adjacent to the first group 46. The square heating pattern 52 is repeated multiple times along the extension of the first group 46. Furthermore, the square heating patterns 52 above the first linear heating pattern 48 are offset along the direction of the leading edge portion 24 relative to the square heating patterns 52 below the first linear heating pattern 48.

The control device 34 further energizes heating elements such that the energized heating elements are progressively further away from the first group 46.

As depicted in Fig. 5, subsequent to the square heating pattern 52, the second group 50 is energized such that a U shaped heating pattern 54 is generated. The opening of the U is facing the first group 46. Furthermore, leg portions 56 of the U shaped heating pattern 54 are arranged adjacent to the first group 46.

Similarly, to the square heating patterns 52, the U shaped heating patterns 54 are offset along the extension of the first linear heating pattern 48 and depending on whether the U shaped heating pattern 54 is above or below the first linear heating pattern 48. Preferably, the U shaped heating patterns 54 are arranged such that a meandering heating pattern 58 is generated.

Further in this embodiment, the second group 50 is energized by the control device 34 such that a T shaped heating pattern 60 is generated. A stem portion 62 of the T shaped heating pattern 60 is arranged adjacent to the first linear heating pattern 48. The stem portion 62 extends orthogonally relative to the first linear heating pattern 48.

Again, a plurality of T shaped heating patterns 60 is offset along the first linear heating pattern 48. The T shaped heating pattern 60 are arranged such that each stem portion 62 is adjacent to the first linear heating pattern 48 and a crossbar portion 64 connects the respective stem portions 62 on one side of the first linear heating pattern 48. In other words, all heating elements 36 with the exception of a rectangular de-energized portion 66 are energized.

Finally, in this embodiment, the second group 50 is de-energized, while the first group 46 is kept energized.

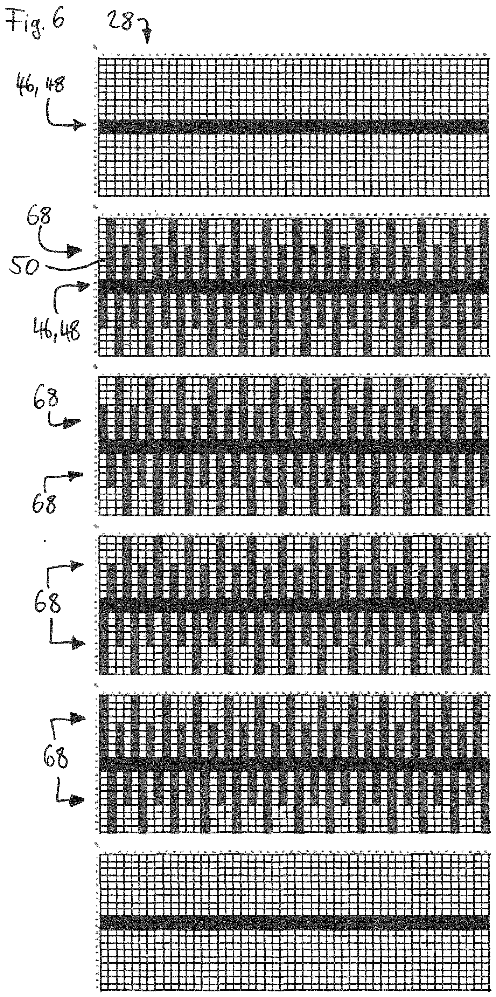

Referring to Fig. 6, another embodiment of a de-icing cycle is described in more detail. Regarding the first group 46, the de-icing cycle is identical to the previously described de-icing cycle.

Different from the previous de-icing cycle, the second group 50 is configured as a pair of heating columns 68. The heating columns 68 extend orthogonal to the first group 46. One of the heating columns 68 is shorter than the other one of the heating columns 68. As depicted from top to bottom in Fig. 6, the heating columns 68 are energized and de-energized such that the heating columns 68 seem to progress along the direction of the leading edge portion 24 from left to right. It should be noted that a progression in the opposite direction is also possible.

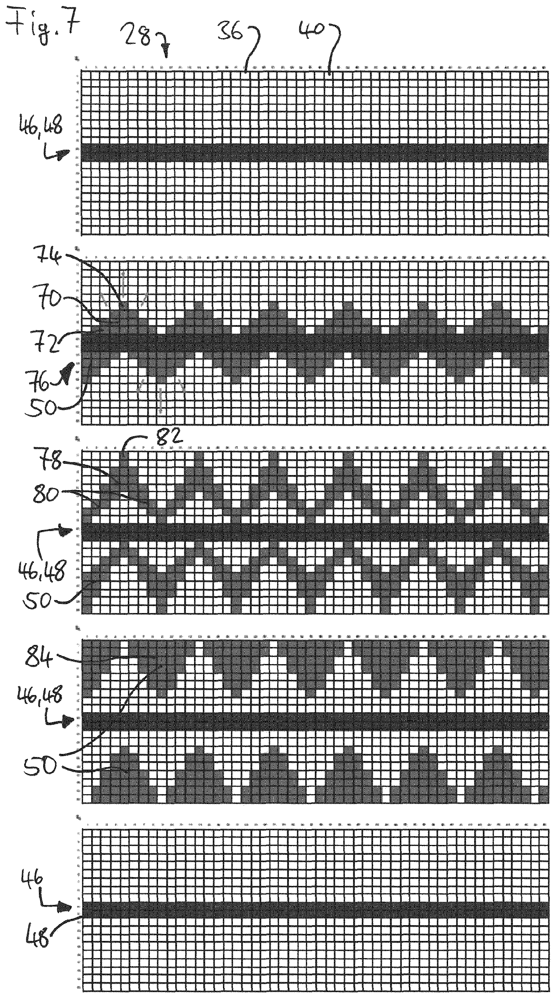

Referring to Fig. 7, the first group 46 is energized in the same way as in the previously described embodiments. The second group 50 is energized by the control device 34 such that a triangular heating pattern 70 is generated. The triangular heating pattern 70 is preferably configured as an isosceles triangle. The triangular heating pattern 70 is arranged such that a base portion 72 is arranged adjacent to the first group 46, whereas a tip portion 74 is facing away from the first group 46. The triangular heating pattern 70 are again offset along the direction of the first linear heating pattern 48 and preferably have a different offset depending on whether the triangular heating pattern 70 is above or below the first linear heating pattern 48. As depicted in Fig. 7, the triangular heating pattern 70 are preferably arranged such that a meandering heating pattern 76 is created.

Further in this embodiment, the control device 34 energizes the second group 50 such that a V shaped heating pattern 78 is created. Similarly to the U shaped heating pattern 54, leg portions 80 of the V shaped heating pattern 78 are arranged adjacent to the first linear heating pattern 48. Furthermore, a tip portion 82 of the V shaped heating pattern 78 is facing away from the first linear heating pattern 48.

As depicted in Fig. 7, the previously energized triangular heating pattern 70 and meandering heating pattern 76, respectively, are de-energized in this state.

As further depicted in Fig. 7, the second group 50 is again energized in a triangular heating pattern 84, however, the base portion 72 and the tip portion 74 are flipped.

In other words, the control device 34 energized the heating elements 36 such that the heating elements 36 are progressively energized further away from the first linear heating pattern 48, whereby none of the heating elements 36 is energized twice during progression of the de-icing cycle.

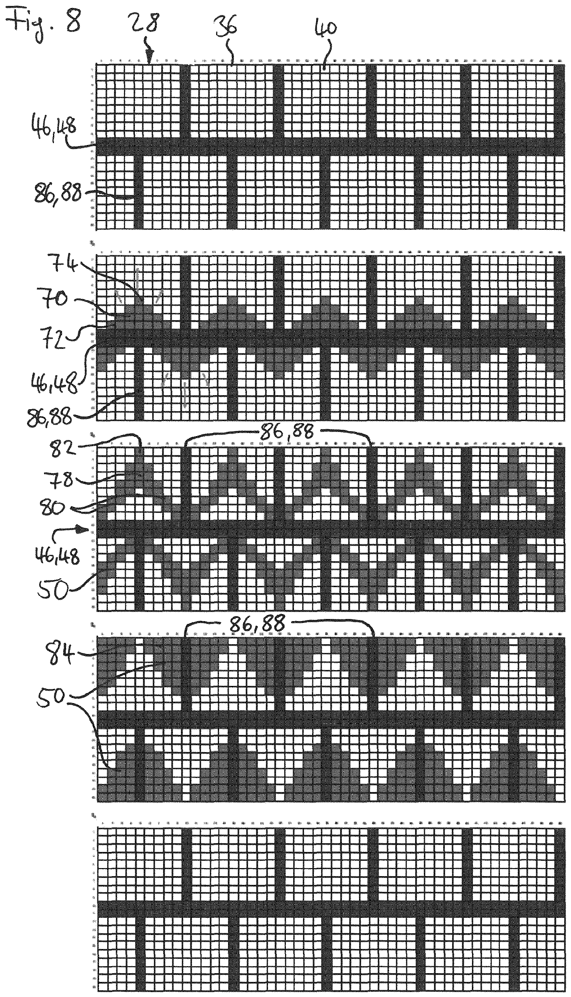

Referring to Fig. 8, another embodiment of a de-icing cycle is depicted, which is a variant of the de-icing cycle according to Fig. 7. In addition to the first group 46 and the second group 50, which exhibits the same progression as in the previously described embodiment, a third group 86 of heating elements is energized. The third group 86 creates a second linear heating pattern 88 that extends orthogonally from the first linear heating pattern 48. The first group 46 and third group 86 are permanently energized.

Furthermore, as depicted in Fig. 8, the second group 50 is energized such that the respective patterns are formed between two neighboring second linear heating patterns 88.

In case of the triangular heating pattern 84, the third group 86 is arranged such that it forms a symmetry line of the triangular heating pattern 84.

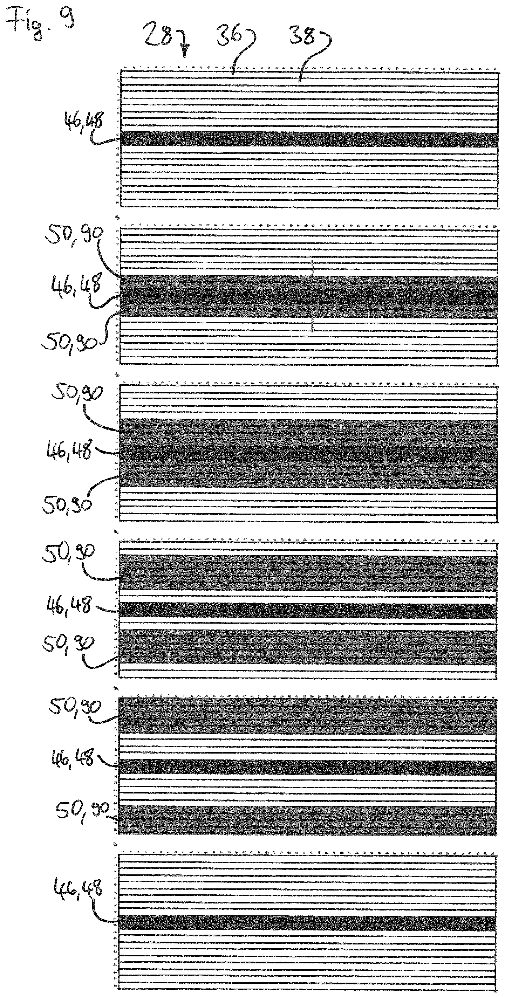

Referring to Fig. 9, the heating foil 28 is configured as having the heating stripe 38. As depicted in Fig. 9, the first group 46 again forms a first linear heating pattern 48 that extends substantially in parallel to the leading edge portion 24.

As further depicted in Fig. 9, the second group 50 is energized so as to form a row heating pattern 90 that extends parallel to the first linear heating pattern 48.

The control device 34 is configured such that the heating stripes 38 are energized progressively away from the first linear heating pattern 48. In other words, the patterns are created such that the heat seems to move away from the first linear heating pattern 48.

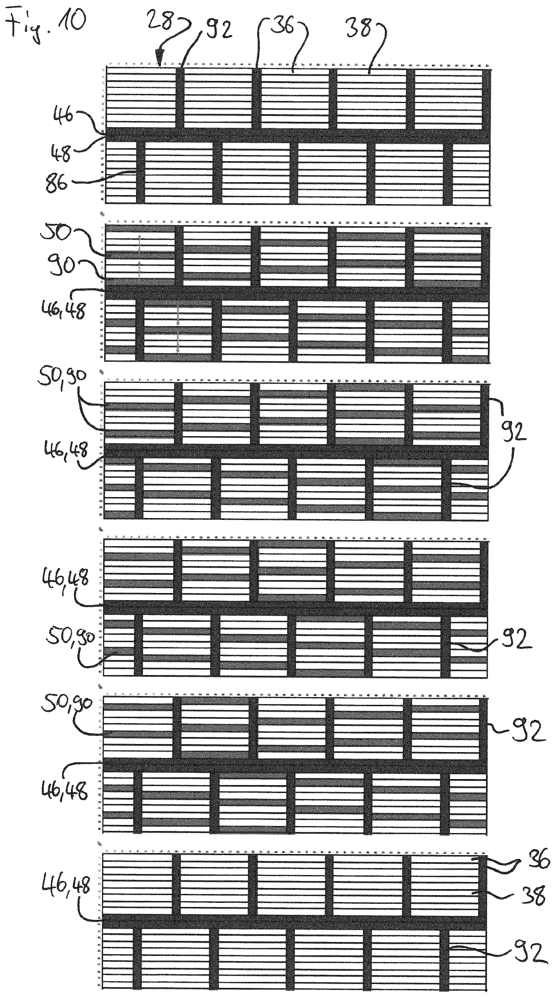

Referring now to Fig. 10, another embodiment of a de-icing cycle, which is a variant of the de-icing cycle of Fig. 9, is described. In this embodiment, the heating foil 28 in addition to the heating stripes 38 further comprises of orthogonal heating stripes 92 that orthogonally extend from the first group 46. The orthogonal heating stripes 92 form the third group 86 in this embodiment.

The second group 50 is energized by the control device 34 such that the heating stripes 38 are energized progressively moving outward from the first group 46, where in the second group 50 is arranged between two neighboring orthogonal heating stripes 92.

It should be noted that different de-icing cycles may be repeatedly executed in order to break off ice that has accumulated on the leading edge portion 24.

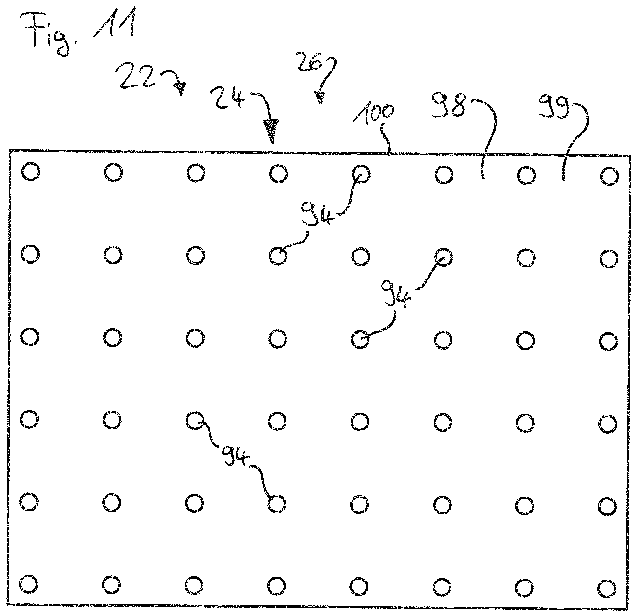

Referring to Figs. 11 through 14, the leading edge portion 24 is described in further detail. The leading edge portion 24 includes microperforations 94. The microperforations 94 are part of a hybrid laminar flow control (HLFC) system. Thus, the microperforations 94, which usually have a diameter of around 50 micrometers should be kept clean of contaminants 96.

The leading edge portion 24 includes a superhydrophobic coating 98. In this embodiment, the superhydrophobic coating 98 is only arranged on the skin of the leading edge portion 24.

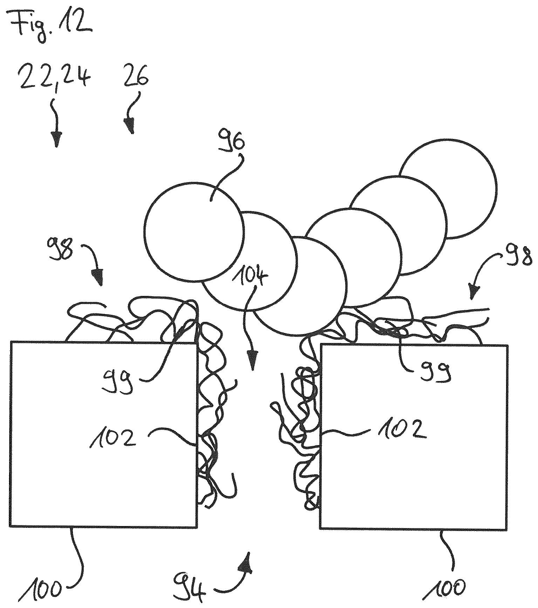

Referring to Fig. 12, a cross section through the leading edge portion 24 is depicted. In this embodiment, the superhydrophobic coating 98 is not only arranged on the skin of the leading edge portion but also on a sidewall 102 of the microperforations 94. It should be noted that in this embodiment, a flow channel 104 is kept free of the superhydrophobic coating 98.

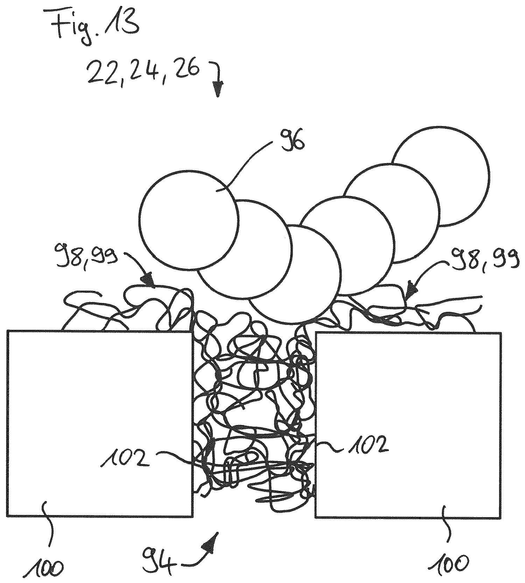

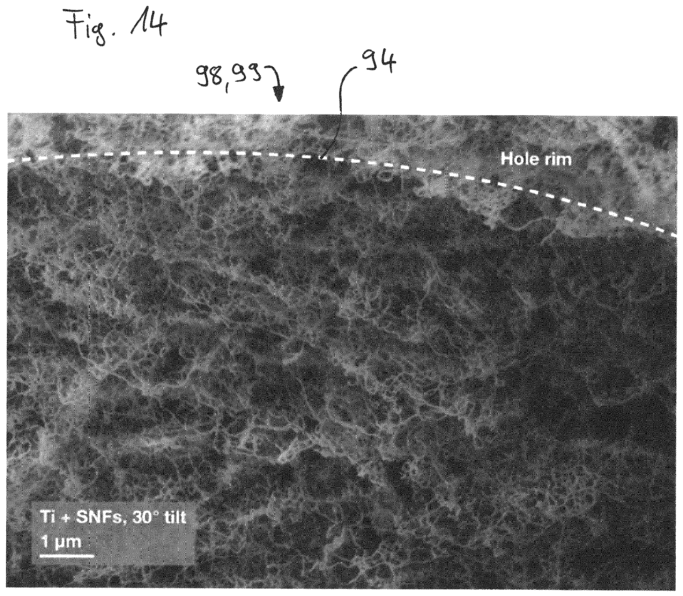

Referring to Fig. 13, a further embodiment of the leading edge portion 24 that is similar to the embodiment depicted in Fig. 12 is depicted. In this embodiment, the superhydrophobic coating 98 is arranged on the skin 100, the sidewall 102, and within the entire volume of the microperforation 94. The superhydrophobic coating 98 is sufficiently porous so as to not impede the function of the microperforations 94 in the HLFC system (see microscopic image depicted in Fig. 14).

Silicone nanofilament (SNF) networks 99 grown on surfaces have been shown to have water-repelling properties. When the SNF networks 99 are fluorinated, they also show oil-repelling properties.

By growing a network of fluorinated SNFs 99 on the surface of a microperforated airfoil 22, such as a VTP, the outer airfoil surface will gain these oil-and water-repelling properties.

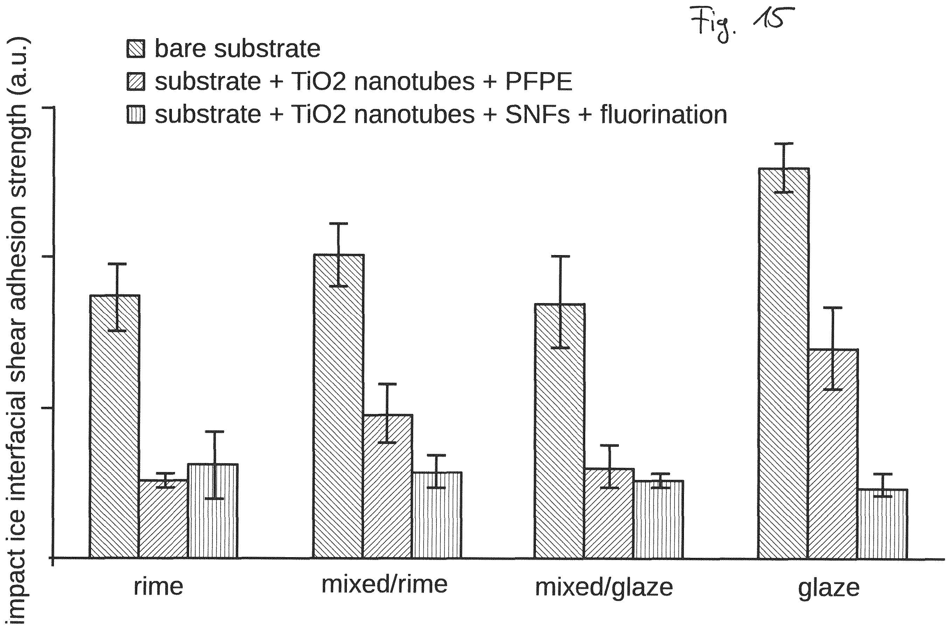

Referring to Fig. 15, the results of experiments are depicted, which show the effects of the superhydrophobic coating 98. The superhydrophobic coating 98, as used herein, includes a silicone nanofilament network 99, which has in and of itself water-repelling properties. The superhydrophobic coating 98 may also be configured as a superoleophobic coating, if the silicone nanofilament networks are fluorinated and thus additionally exhibit oil-repelling properties.

Fig. 15 shows the interfacial adhesion strength of four different types of impact ice (ice formed by impacting supercooled water droplets in-flight) on three different surfaces. The first surface is the native oxide layer on a metal alloy whose primary component is titanium (Ti6Al4V).

The second surface is that described in WO 2013 / 091 601A2, specifically, the same alloy anodized such that the oxide layer grew in the shape of nanotubes, and which was subsequently fluorinated using a commercial perfluoropolyether solution.

The last surface is the same as the second, except instead of fluorinating it using the commercial solution, SNFs 99 were grown on the nanotubes and subsequently fluorinated using the method described below.

The results show that for rime and mixed/glaze conditions, the fluorinated SNFs surface is at par with the commercially fluorinated surface. For mixed/rime, and glaze, however, the fluorinated SNFs 99 showed lower adhesion strength to ice, thus proving improved performance.

For every icing condition, the fluorinated SNFs 99 and the commercially fluorinated nanotubes showed lower ice adhesion strength than the "bare" native oxide surface. The experiments show that fluorinated SNF networks 99 in general also exhibit ice-phobic properties and are durable enough to endure several icing/de-icing cycles.

By growing a network of fluorinated SNFs 99 inside of the perforations of the microperforated VTP, oil and water are repelled by the perforation walls, and will therefore not remain stuck inside the perforations.

In one embodiment, the silicone nanofilaments cover the surface of the micropores but do not bridge the diameter (Fig. 12). Due to the small pore size and the am-phiphobicity of the fluorinated silicone nanofilament network, droplets of water and oil greater than the micropore diameter are completely repelled, while smaller droplets are hindered in their passage through the microperforations.

In addition, the sidewalls 102 are coated, so the effective diameter accessible to a droplet is slightly decreased; from a probabilistic point of view, the coating on the rims and on the "entrance" of the walls reduces the number of configurations (in terms of impact point and trajectory) that can result in a droplet going through the hole.

Furthermore, by growing a network of fluorinated SNFs inside of the perforations of the microperforated airfoil 22, such that the network covers the entire diameter of the microperforations 94, no foreign matter composed of oil or water could enter the pores. Since the SNF network is itself porous, it does not prevent air from passing through the microperforations 94.

In another embodiment, the silicone nanofilament network 99 bridges the entire diameter of the micropores (Fig. 13). Due to the porous nature of the nanofilament network, gases such as air can easily pass through the pores, thus retaining the intended functionality of the permeable drag reduction device. The network of SNFs effectively blocks any contaminants of passing through the pores of the micro-perforated plate; liquid contaminants simply bounce off.

The method consists of growing superhydrophobic Silicone Nanofilaments (SNFs) on the surface of the microperforated airfoil 22 through a gas phase silanization process known in the art.

SNFs cover the micro-perforation walls and fill them in the radial direction, creating a porous structure with spacings one or two orders of magnitude lower than the micro-perforation diameter. A subsequent fluorination makes the SNFs oleophobic or superoleophobic and therefore reduces the adhesion that both liquid and particulate contaminants have to the surface. Moreover, the combined silanization and fluorination treatments reduce the adhesion of ice to the surface.

Typical airfoils, such as the VTP comprise a metal alloy containing primarily Ti, and possibly containing additional elements such as V, Fe, Sn, Ni, Nb, Mo, Zr, Y, Hf, Ta, Ce, Tb , Nd, Gd, Dy, Ho and Er and/or additionally at least one further element selected from the group comprising Zn, Mn, Ag, Li, Cu, Si, Al or Ca.

The metallic plate is anodized in order to produce a nanoporous layer comprising nanotubes including titanium dioxide using a process described in WO 2013 / 091 601 A2. The resulting nanotubes have diameters in the range of 30 nm to 600 nm.

Prior to silanization, microperforated airfoils are pre-treated with an alkaline solution which may contain surface active compounds. One example of such treatment is sonication for 15 minutes in a 10%v/v aqueous solution of *Deconex 11 universal* (by Borer Chemie AG), after which samples are rinsed with deionized water and dried with N₂ gas flow.

In our instance, the process employs a silanizing mixture comprised of at least one component of formula I and at least one component of formula II:

I. R^{a}Si(X¹)₃

II. R^{b}Si(X²)₃

where R^{a} and R^{b} are a straight-chain or branched C(₁₋₂₄) alkyl group and R⁸ may or may not be equal to R^{b}.
X¹ and X² are hydrolysable groups, where X¹ is a halogen, such as chlorine or fluorine, and X² is an alkoxy group.

With this method, the micro-perforations walls are completely covered with a layer of SNFs with diameter in the range 50 nm - 200 nm. The so-obtained porous coating has a thickness in the order of micrometre to tens of micrometres, which can partly or completely fill the micro-perforations in the radial direction.

This gas phase process is particularly suited to coat surfaces with complex shapes at the sub-millimetre range, such as the airfoil microperforations 94, when compared to conventional liquid- or spray-based processes. Moreover, scale-up of this process to coat large (1 m²) substrates has been demonstrated (Artus, G. and Seeger, S. (2012). Ind. Eng. Chem. Res., 51, 2631).

Fluorination can be carried out either as a solvent phase or vapour phase process, as described in the art (Zimmermann, J. et al. (2008). Soft Matter, 4(3), 450. doi:10.1039/b717734h; Bhushan, B. et al. (2006). J. Vac. Sci. Technol. A, 24(4), 1197).

Prior to chemical modification, SNFs are activated by exposition to O₂ plasma. The material is then exposed to at least one fluorinating agent of formula III:

III. R^{c}Si(X³)₃

where R^{c} is a perfluorinated or polyfluorinated alkyl chain C₍₁₋₂₄₎, X³ is a hydrolysable group, such a as a halogen or alkoxy group.

This process introduces fluorine-containing groups that are covalently linked to the surface. As such, it is superior in quality and stability to conventional treatments with perfluoropolyether (PFPE) compounds that are instead only bound to the surface through weak interactions.

Regarding further information regarding the silicone nanofilament networks, reference is made to the manuscript "Silicone Nanofilaments Grown on Aircraft Alloys for Low Ice Adhesion" by Laroche et al.

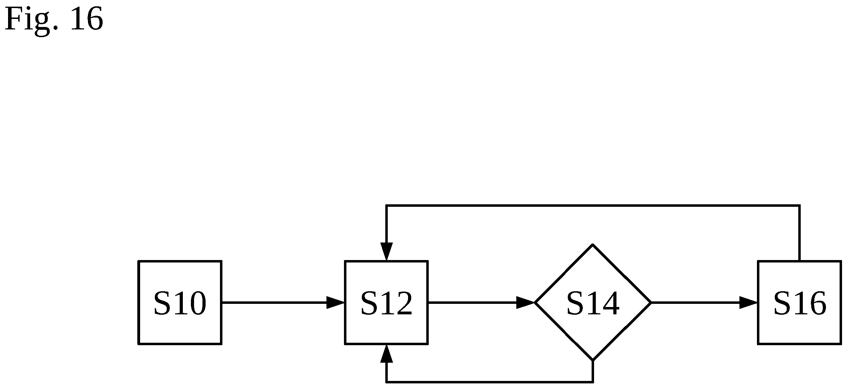

Referring now to Fig. 16, an embodiment of a de-icing method is described in more detail.

The de-icing method includes a sensing step S10. In the sensing step S10 the ice detecting device 30 detects, whether there is ice formation on the airfoil 22.

The de-icing method further includes a measuring step S12. The measuring step S12 is executed after the sensing step S10. In the measuring step S12, the control device 34 based on the data of the detecting device 30 determines the intensity of ice formation, e.g. as thickness increase per time unit in arbitrary units.

The de-icing method further includes a comparing step S14. The comparing step S14 is executed after the measuring step S12. In the comparing step S14 the intensity of ice formation that was determined in the measuring step S12 is compared with a predetermined threshold of an acceptable ice formation intensity.

If the measured intensity is below the threshold, the de-icing method is continued in the measuring step S12.

If the measured intensity exceeds the threshold, the de-icing method is continued in a de-icing step S16. In the de-icing step S16, the heating foil 28 is energized by the control device 34 such that any of the previously described heating patterns is generated or any of the previously described de-icing cycles is performed.

After the de-icing step S16 is performed, the method skips to the measuring step S12.

In order to improve de-icing systems for an aircraft (10), a de-icing system (26) is proposed. The de-icing system (26) comprises a thin film heating foil (28) that is adhesively bonded to the leading edge portion (24). The heating foil (28) comprises a plurality of heating elements (36). In addition, an ice detecting device (30) is provided, which is able to detect the presence of ice on the leading edge portion (24) by optical, acoustical or thermal means. The de-icing system (26) has a control device (34), which is configured for periodically and selectively energizing the heating elements (36). To further improve the performance of the de-icing system (26), a silicone nanofilament network (SNF) is added as a superhydrophobic coating (98) on a microperforated skin (100) and within the microperforations (94).

### List reference signs

- 10: aircraft
- 12: fuselage
- 14: wing
- 16: high-lift device
- 18: horizontal tail plane
- 20: vertical tail plane
- 22: airfoil
- 24: leading edge portion
- 26: de-icing system
- 28: heating foil
- 30: ice detecting device
- 32: thermocouple
- 34: control device
- 36: heating elements
- 38: heating stripes
- 40: heating rectangles
- 42: heating row
- 44: heating column
- 46: first group
- 48: first linear heating pattern
- 50: second group
- 52: square heating pattern
- 54: U shaped heating pattern
- 56: leg portion
- 58: meandering heating pattern
- 60: T shaped heating pattern
- 62: stem portion
- 64: crossbar portion
- 66: rectangular de-energized portion
- 68: heating column
- 70: triangular heating pattern
- 72: base portion
- 74: tip portion
- 76: meandering heating pattern
- 78: V shaped heating pattern
- 80: leg portion
- 82: tip portion
- 84: triangular heating pattern
- 86: third group
- 88: second linear heating portion
- 90: row heating pattern
- 92: orthogonal heating stripes
- 94: microperforations
- 96: contaminant
- 98: superhydrophobic coating
- 99: silicone nanofilament network
- 100: skin
- 102: sidewall
- 104: flow channel

## Claims

1. A de-icing system (26) configured for preventing the formation of and/or removing ice on a leading edge portion (24) of an airfoil (22) of an aircraft (10) , the de-icing system (26) comprising a heating foil (28) that is adhesively bondable to the leading edge portion (24) and that has a plurality of heating elements (36) that are configured to be selectively energized for heating, an ice detecting device (30) configured for detecting the presence of ice on the leading edge portion (24), and a control device (34) configured for periodically and selectively energizing the heating elements (36) based on the ice presence measured by the ice detecting device (30), wherein the control device (34) is further configured to energize a first group (46) of the heating elements (36) such that a first linear heating pattern (48) parallel to the leading edge portion (24) is formed, in order to create a predetermined breaking line, wherein the control device (34) is further configured to energize a third group (86) of the heating elements (36) such that a plurality of second linear heating patterns (88) that are parallel to each other and orthogonal to the first heating line are formed, **characterized in that** the control device (34) is configured to progressively energize and de-energize the heating elements (36) so as to transition between different heating patterns in such a manner that the heating elements (36) are energized progressively further away from the predetermined breaking line.

2. The de-icing system (26) according to claim 1, wherein the ice detecting device (30) is integrated within the heating foil and/or wherein the ice detecting device (30) includes a temperature sensor, preferably a thermocouple (32).

3. The de-icing system (26) according to any of the preceding claims, wherein the heating elements (36) include carbon based material or a carbon based thin film configured to produce heat when energized.

4. The de-icing system (26) according to any of the preceding claims, wherein the control device (34) is further configured to energize a second group (50) of the heating elements (36) such that at least one of the following heating patterns is formed:
- a square heating pattern (52) arranged adjacent to a predetermined breaking line of the leading edge portion (24); and/or
- a U shaped heating pattern (54) that has its opening facing towards a pre-determined breaking line of the leading edge portion (24); and/or
- a T shaped heating pattern (60) that has its stem adjacent to a predetermined breaking line of the leading edge portion (24); and/or
- a triangular heating pattern (70) that has its base adjacent to a predetermined breaking line of the leading edge portion (24), wherein preferably the heating triangle pattern (70) is interposed between two consecutive third groups (86) of heating elements (36); and/or
- a V shaped heating pattern (78) that has its tip facing away from the predetermined breaking line of the leading edge portion (24), wherein preferably the heating V shaped pattern (78) is interposed between two consecutive third groups (86) of heating elements (36); and/or
- a triangular heating pattern (84) that has a tip arranged with a distance from and facing a predetermined breaking line of the leading edge portion (24);
- a heating pattern having a pair of heating columns (44) that extend orthogonal to a predetermined breaking line of the leading edge portion (24), wherein in one of the columns extends further than the other column; and/or
- a row heating pattern (90) that extends parallel to a predetermined breaking line of the leading edge portion (24); and/or
- a heating pattern of a plurality of heating rows (42) that extend parallel to a predetermined breaking line of the leading edge portion (24), wherein the heating rows (42) extend between the third group (86) of the heating elements (36).

5. The de-icing system (26) according to any of the preceding claims, wherein the control device (34) is configured to cyclically energize and de-energize the heating elements (36).

6. The de-icing system (26) according to any of the preceding claims, wherein the control device (34) is configured to progressively energize and de-energize the heating elements, preferably the second group (50), so as to transition between different heating patterns in such a manner that the heating elements (36) are energized progressively further along the predetermined breaking line.

7. The de-icing system (26) according to any of the preceding claims, wherein one or more heating patterns, a specific heating pattern or all heating patterns are repeated along the predetermined breaking line, wherein preferably the heating patterns on one side of the predetermined breaking line are offset along the predetermined breaking line relative to the heating patterns on the other side of the pre-determined breaking line.

8. The de-icing system (26) according to any of the preceding claims, further comprising a superhydrophobic coating (98) that is applicable to the leading edge portion (24), wherein the superhydrophobic coating (98) comprises a silicone nanofilament network.

9. An airfoil (22) for an aircraft (10) comprising a leading edge portion (24) and an de-icing system (26) according to any of the preceding claims, wherein the heating foil (28) is arranged at, preferably adhesively bonded to, an inner side of the leading edge portion (24), wherein the ice detecting device (30) is arranged so as to allow for detection of ice on an outer side of the leading edge portion (24).

10. The airfoil (22) according to claim 9, wherein the leading edge portion (24) includes a plurality of microperforations (94) configured for preserving laminarity of an aerodynamic boundary layer adjacent to the airfoil (22), wherein a superhydrophobic coating (98) that has a silicone nanofilament network is arranged on an outer surface of the leading edge portion (24) and/or a side wall portion of the microperforations (94).

11. The airfoil (22) according to any of the claims 9 or 10, wherein the airfoil (22) is configured as a horizontal tail plane (18), a vertical tail plane (20), a wing (14), a high-lift device (16) or a rotor blade.

12. An aircraft (10) comprising a de-icing system (26) according to any of the claims 1 to 8 and/or an airfoil (22) according to any of the claims 9 to 11.

13. A de-icing method for de-icing a leading edge portion (24) of an airfoil (22) of an aircraft (10) using a heating foil (28) attached to the leading edge portion (24), the heat foil having a plurality of heating elements (36), the method comprising the steps of:
a) energizing a first group (46) of heating elements (36) such that a first heating line parallel to the leading edge portion (24) is formed, in order to create a pre-determined breaking line; and
b) energizing a second group (50) of heating elements (36) such that a progression of heating patterns is generated that progress further away from the pre-determined breaking line,
c) energizing a third group (86) of heating elements such that a plurality of second heating lines that are parallel to each other and orthogonal to the first heating line are formed,
wherein the heating elements (36) are progressively energized and de-energized so as to transition between different heating patterns in such a manner that the heating elements (36) are energized progressively further away from the predetermined breaking line.

## Patentansprüche

1. Enteisungssystem (26), das zum Verhindern der Bildung von und/oder Entfernen von Eis auf einem Vorderkantenabschnitt (24) einer Tragfläche (22) eines Luftfahrzeugs (10) ausgelegt ist, wobei das Enteisungssystem (26) eine Heizfolie (28), die mit dem Vorderkantenabschnitt (24) haftend verbindbar ist und die mehrere Heizelemente (36) aufweist, die dazu ausgelegt sind, zum Erwärmen selektiv erregt zu werden, eine Eisdetektionsvorrichtung (30), die zum Detektieren des Vorhandenseins von Eis auf dem Vorderkantenabschnitt (24) ausgelegt ist, und eine Steuervorrichtung (34) umfasst, die zum periodischen und selektiven Erregen der Heizelemente (36) basierend auf dem durch die Eisdetektionsvorrichtung (30) gemessenen Vorhandensein von Eis ausgelegt ist, wobei die Steuervorrichtung (34) ferner dazu ausgelegt ist, eine erste Gruppe (46) der Heizelemente (36) zu erregen, so dass ein erstes lineares Heizmuster (48) parallel zu dem Vorderkantenabschnitt (24) gebildet wird, um eine Sollbruchlinie zu erzeugen, wobei die Steuervorrichtung (34) ferner dazu ausgelegt ist, eine dritte Gruppe (86) der Heizelemente (36) zu erregen, so dass mehrere zweite lineare Heizmuster (88), die parallel zueinander und orthogonal zu der ersten Heizlinie sind, gebildet werden, **dadurch gekennzeichnet, dass** die Steuervorrichtung (34) dazu ausgelegt ist, die Heizelemente (36) fortlaufend zu erregen und zu entregen, um derart zwischen unterschiedlichen Heizmustern überzugehen, dass die Heizelemente (36) fortlaufend weiter von der Sollbruchlinie weg erregt werden.

2. Enteisungssystem (26) nach Anspruch 1, wobei die Eisdetektionsvorrichtung (30) in die Heizfolie integriert ist und/oder wobei die Eisdetektionsvorrichtung (30) einen Temperatursensor, vorzugsweise ein Thermoelement (32), umfasst.

3. Enteisungssystem (26) nach einem der vorhergehenden Ansprüche, wobei die Heizelemente (36) Material auf Kohlenstoffbasis oder einen Dünnfilm auf Kohlenstoffbasis umfassen, das bzw. der dazu ausgelegt ist, bei Erregung Wärme zu erzeugen.

4. Enteisungssystem (26) nach einem der vorhergehenden Ansprüche, wobei die Steuervorrichtung (34) ferner dazu ausgelegt ist, eine zweite Gruppe (50) der Heizelemente (36) zu erregen, sodass mindestens eines der folgenden Heizmuster gebildet wird:
- ein quadratisches Heizmuster (52), das angrenzend an eine Sollbruchlinie des Vorderkantenabschnitts (24) angeordnet ist; und/oder
- ein U-förmiges Heizmuster (54), dessen Öffnung einer Sollbruchlinie des Vorderkantenabschnitts (24) zugewandt ist; und/oder
- ein T-förmiges Heizmuster (60), dessen Schaft an eine Sollbruchlinie des Vorderkantenabschnitts (24) angrenzt; und/oder
- ein dreieckiges Heizmuster (70), dessen Basis an eine Sollbruchlinie des Vorderkantenabschnitts (24) angrenzt, wobei vorzugsweise das dreieckige Heizmuster (70) zwischen zwei aufeinanderfolgenden dritten Gruppen (86) von Heizelementen (36) angeordnet ist; und/oder
- ein V-förmiges Heizmuster (78), dessen Spitze von der Sollbruchlinie des Vorderkantenabschnitts (24) abgewandt ist, wobei vorzugsweise das V-förmige Heizmuster (78) zwischen zwei aufeinanderfolgenden dritten Gruppen (86) von Heizelementen (36) angeordnet ist; und/oder
- ein dreieckiges Heizmuster (84), das eine Spitze aufweist, die mit einem Abstand von einer Sollbruchlinie des Vorderkantenabschnitts (24) angeordnet und dieser zugewandt ist;
- ein Heizmuster mit einem Paar von Heizsäulen (44), die sich orthogonal zu einer Sollbruchlinie des Vorderkantenabschnitts (24) erstrecken,
wobei sich eine der Säulen weiter als die andere Säule erstreckt; und/oder
- ein Reihenheizmuster (90), das sich parallel zu einer Sollbruchlinie des Vorderkantenabschnitts (24) erstreckt; und/oder
- ein Heizmuster aus mehreren Heizreihen (42), die sich parallel zu einer Sollbruchlinie des Vorderkantenabschnitts (24) erstrecken, wobei sich die Heizreihen (42) zwischen der dritten Gruppe (86) der Heizelemente (36) erstrecken.

5. Enteisungssystem (26) nach einem der vorhergehenden Ansprüche, wobei die Steuervorrichtung (34) dazu ausgelegt ist, die Heizelemente (36) zyklisch zu erregen und zu entregen.

6. Enteisungssystem (26) nach einem der vorhergehenden Ansprüche, wobei die Steuervorrichtung (34) dazu ausgelegt ist, die Heizelemente, vorzugsweise die zweite Gruppe (50), fortlaufend zu erregen und zu entregen, um derart zwischen unterschiedlichen Heizmustern überzugehen, dass die Heizelemente (36) fortlaufend weiter entlang der Sollbruchlinie erregt werden.

7. Enteisungssystem (26) nach einem der vorhergehenden Ansprüche, wobei sich ein oder mehrere Heizmuster, ein spezifisches Heizmuster oder alle Heizmuster entlang der Sollbruchlinie wiederholen, wobei vorzugsweise die Heizmuster auf einer Seite der Sollbruchlinie entlang der Sollbruchlinie relativ zu den Heizmustern auf der anderen Seite der Sollbruchlinie versetzt sind.

8. Enteisungssystem (26) nach einem der vorhergehenden Ansprüche, ferner umfassend eine superhydrophobe Beschichtung (98), die auf den Vorderkantenabschnitt (24) aufbringbar ist, wobei die superhydrophobe Beschichtung (98) ein Silikonnanofilamentnetz umfasst.

9. Tragfläche (22) für ein Luftfahrzeug (10), umfassend einen Vorderkantenabschnitt (24) und ein Enteisungssystem (26) nach einem der vorhergehenden Ansprüche, wobei die Heizfolie (28) an, vorzugsweise haftend verbunden mit, einer Innenseite des Vorderkantenabschnitts (24) angeordnet ist, wobei die Eisdetektionsvorrichtung (30) so angeordnet ist, dass eine Detektion von Eis auf einer Außenseite des Vorderkantenabschnitts (24) ermöglicht wird.

10. Tragfläche (22) nach Anspruch 9, wobei der Vorderkantenabschnitt (24) mehrere Mikroperforationen (94) umfasst, die zum Beibehalten einer Laminarität einer aerodynamischen Grenzschicht angrenzend an die Tragfläche (22) ausgelegt sind, wobei eine superhydrophobe Beschichtung (98), die ein Silikonnanofilamentnetz aufweist, auf einer Außenfläche des Vorderkantenabschnitts (24) und/oder einem Seitenwandabschnitt der Mikroperforationen (94) angeordnet ist.

11. Tragfläche (22) nach einem der Ansprüche 9 oder 10, wobei die Tragfläche (22) als ein Höhenleitwerk (18), ein Seitenleitwerk (20), ein Flügel (14), eine Hochauftriebsvorrichtung (16) oder ein Rotorblatt ausgelegt ist.

12. Luftfahrzeug (10), das ein Enteisungssystem (26) nach einem der Ansprüche 1 bis 8 und/oder eine Tragfläche (22) nach einem der Ansprüche 9 bis 11 umfasst.

13. Enteisungsverfahren zum Enteisen eines Vorderkantenabschnitts (24) einer Tragfläche (22) eines Luftfahrzeugs (10) unter Verwendung einer Heizfolie (28), die an dem Vorderkantenabschnitt (24) angebracht ist, wobei die Heizfolie mehrere Heizelemente (36) aufweist, wobei das Verfahren die folgenden Schritte umfasst:
a) Erregen einer ersten Gruppe (46) von Heizelementen (36), so dass eine erste Heizlinie parallel zu dem Vorderkantenabschnitt (24) gebildet wird, um eine Sollbruchlinie zu erzeugen; und
b) Erregen einer zweiten Gruppe (50) von Heizelementen (36), so dass ein Verlauf von Heizmustern erzeugt wird, die fortlaufend weiter von der Sollbruchlinie weg verlaufen,
c) Erregen einer dritten Gruppe (86) von Heizelementen, so dass mehrere zweite Heizlinien, die parallel zueinander und orthogonal zu der ersten Heizlinie sind, gebildet werden,
wobei die Heizelemente (36) fortlaufend erregt und entregt werden, um derart zwischen unterschiedlichen Heizmustern überzugehen, dass die Heizelemente (36) fortlaufend weiter von der Sollbruchlinie weg erregt werden.

## Revendications

1. Système de dégivrage (26) configuré pour empêcher la formation de givre et/ou éliminer le givre sur une partie de bord d'attaque (24) d'une voilure (22) d'un aéronef (10), le système de dégivrage (26) comprenant une feuille chauffante (28) susceptible d'être collée à la partie de bord d'attaque (24) et pourvue d'une pluralité d'éléments chauffants (36) configurés pour être activés sélectivement pour chauffer, un dispositif de détection de givre (30) configuré pour détecter la présence de givre sur la partie de bord d'attaque (24), et un dispositif de commande (34) configuré pour activer périodiquement et sélectivement les éléments chauffants (36) en fonction de la présence de givre mesurée par le dispositif de détection de givre (30), le dispositif de commande (34) étant configuré en outre pour activer un premier groupe (46) des éléments chauffants (36) de sorte à former un premier motif chauffant linéaire (48) parallèle à la partie de bord d'attaque (24), afin de créer une ligne de rupture prédéterminée, le dispositif de commande (34) étant configuré en outre pour activer un troisième groupe (86) des éléments chauffants (36) de sorte à former une pluralité de deuxièmes motifs chauffants linéaires (88) parallèles entre eux et orthogonaux à la première ligne chauffante, **caractérisé en ce que** le dispositif de commande (34) est configuré pour activer et désactiver progressivement les éléments chauffants (36) dans le but d'effectuer une transition entre différents motifs chauffants de manière à activer progressivement les éléments chauffants (36) de plus en plus loin de la ligne de rupture prédéterminée.

2. Système de dégivrage (26) selon la revendication 1, dans lequel le dispositif de détection de givre (30) est intégré dans la feuille chauffante et/ou dans lequel le dispositif de détection de givre (30) comprend un capteur de température, de préférence un thermocouple (32).

3. Système de dégivrage (26) selon l'une quelconque des revendications précédentes, dans lequel les éléments chauffants (36) comportent un matériau à base de carbone ou un film mince à base de carbone configuré pour produire de la chaleur lorsqu'il est activé.

4. Système de dégivrage (26) selon l'une quelconque des revendications précédentes, dans lequel le dispositif de commande (34) est configuré en outre pour activer un deuxième groupe (50) des éléments chauffants (36) de sorte à former au moins un des motifs chauffants suivants :
- un motif chauffant carré (52) agencé adjacent à une ligne de rupture prédéterminée de la partie de bord d'attaque (24) ; et/ou
- un motif chauffant en U (54) dont l'ouverture est tournée vers une ligne de rupture prédéterminée de la partie de bord d'attaque (24) ; et/ou
- un motif chauffant en T (60) dont la tige est adjacente à une ligne de rupture prédéterminée de la partie de bord d'attaque (24) ; et/ou
- un motif chauffant triangulaire (70) dont la base est adjacente à une ligne de rupture prédéterminée de la partie de bord d'attaque (24), le motif chauffant triangulaire (70) étant de préférence interposé entre deux troisièmes groupes (86) consécutifs d'éléments chauffants (36) ; et/ou
- un motif chauffant en V (78) dont le sommet est tourné à l'opposé d'une ligne de rupture prédéterminée de la partie de bord d'attaque (24), le motif chauffant en V (78) étant de préférence interposé entre deux troisièmes groupes (86) consécutifs d'éléments chauffants (36) ; et/ou
- un motif chauffant triangulaire (84) dont un sommet est agencé à distance d'une ligne de rupture prédéterminée de la partie de bord d'attaque (24) et lui fait face ;
- un motif chauffant pourvu d'une paire de colonnes chauffantes (44) qui s'étendent orthogonalement à une ligne de rupture prédéterminée de la partie de bord d'attaque (24),
l'une des colonnes s'étendant plus loin que l'autre colonne ; et/ou
- un motif chauffant en rangée (90) qui s'étend parallèlement à une ligne de rupture prédéterminée de la partie de bord d'attaque (24) ; et/ou
- un motif chauffant constitué d'une pluralité de rangées chauffantes (42) qui s'étendent parallèlement à une ligne de rupture prédéterminée de la partie de bord d'attaque (24), les rangées chauffantes (42) s'étendant entre le troisième groupe (86) des éléments chauffants (36).

5. Système de dégivrage (26) selon l'une quelconque des revendications précédentes, dans lequel le dispositif de commande (34) est configuré pour activer et désactiver cycliquement les éléments chauffants (36).

6. Système de dégivrage (26) selon l'une quelconque des revendications précédentes, dans lequel le dispositif de commande (34) est configuré pour activer et désactiver progressivement les éléments chauffants, de préférence le deuxième groupe (50), dans le but d'effectuer une transition entre différents motifs chauffants de manière à activer progressivement les éléments chauffants (36) de plus en plus loin de la ligne de rupture prédéterminée.

7. Système de dégivrage (26) selon l'une quelconque des revendications précédentes, dans lequel un ou plusieurs motifs chauffants, un motif chauffant particulier ou tous les motifs chauffants sont répétés le long de la ligne de rupture prédéterminée, de préférence les motifs chauffants d'un côté de la ligne de rupture prédéterminée étant décalés le long de la ligne de rupture prédéterminée par rapport aux motifs chauffants de l'autre côté de la ligne de rupture prédéterminée.

8. Système de dégivrage (26) selon l'une quelconque des revendications précédentes, comprenant en outre un revêtement superhydrophobe (98) qui est applicable sur la partie de bord d'attaque (24), le revêtement superhydrophobe (98) comprenant un réseau de nanofilaments de silicone.

9. Voilure (22) pour un aéronef (10), comprenant une partie de bord d'attaque (24) et un système de dégivrage (26) selon l'une quelconque des revendications précédentes, dans laquelle la feuille chauffante (28) est agencée au niveau d'un côté intérieur de la partie de bord d'attaque (24), de préférence collée à celui-ci, le dispositif de détection de givre (30) étant agencé dans le but de permettre la détection de givre sur un côté extérieur de la partie de bord d'attaque (24).

10. Voilure (22) selon la revendication 9, dans laquelle la partie de bord d'attaque (24) comporte une pluralité de microperforations (94) configurées pour préserver la laminarité d'une couche limite aérodynamique adjacente à la voilure (22), un revêtement superhydrophobe (98) pourvu d'un réseau de nanofilaments de silicone étant agencé sur une surface extérieure de la partie de bord d'attaque (24) et/ou une partie de paroi latérale des microperforations (94).

11. Voilure (22) selon l'une quelconque des revendications 9 ou 10, la voilure (22) étant configurée sous forme d'un plan fixe horizontal (18), d'un plan fixe vertical (20), d'une aile (14), d'un dispositif hypersustentateur (16) ou d'une pale de rotor.

12. Aéronef (10), comprenant un système de dégivrage (26) selon l'une quelconque des revendications 1 à 8 et/ou une voilure (22) selon l'une quelconque des revendications 9 à 11.

13. Procédé de dégivrage pour dégivrer une partie de bord d'attaque (24) d'une voilure (22) d'un aéronef (10) au moyen d'une feuille chauffante (28) fixée à la partie de bord d'attaque (24), la feuille chauffante étant pourvue d'une pluralité d'éléments chauffants (36), le procédé comprenant les étapes suivantes :
a) activation d'un premier groupe (46) d'éléments chauffants (36) de sorte à former une première ligne chauffante parallèle à la partie de bord d'attaque (24), afin de créer une ligne de rupture prédéterminée ; et
b) activation d'un deuxième groupe (50) d'éléments chauffants (36) de sorte à générer une progression de motifs chauffants progressant de plus en plus loin de la ligne de rupture prédéterminée,
c) activation d'un troisième groupe (86) d'éléments chauffants de sorte à former une pluralité de deuxièmes lignes chauffantes parallèles entre elles et orthogonales à la première ligne chauffante,
dans lequel les éléments chauffants (36) sont activés et désactivés progressivement dans le but d'effectuer une transition entre différents motifs chauffants de manière à activer progressivement les éléments chauffants (36) de plus en plus loin de la ligne de rupture prédéterminée.
